# EUROPÄISCHE PATENTSCHRIFT

(11) **EP 3 944 634 B1**
(45) Veröffentlichungstag und Bekanntmachung des Hinweises auf die Patenterteilung: **30.07.2025**
(21) Anmeldenummer: 21177571.3
(22) Anmeldetag: 03.06.2021
(51) Int. Cl.: H04R 25/00, G06N 20/00, G06N 3/08

(54) **VERFAHREN ZUR IDENTIFIKATION EINES STÖREFFEKTS SOWIE EIN HÖRSYSTEM**
METHOD FOR IDENTIFICATION OF INTERFERENCE AND HEARING DEVICE
PROCÉDÉ D'IDENTIFICATION D'UNE INTERFÉRENCE, AINSI QUE SYSTÈME AUDITIF

(30) Priorität: 20.07.2020 DE 102020209048
(43) Veröffentlichungstag der Anmeldung: 26.01.2022
(73) Patentinhaber: Sivantos Pte. Ltd., Singapore 539775 (SG)
(72) Erfinder: BECK, Frank, 91080 Spardorf (DE)
(74) Vertreter: FDST Patentanwälte

(56) Entgegenhaltungen:
- WO-A1-2005/051039
- DE-A1- 10 114 015
- DE-A1- 102010 012 941
- US-A1- 2013 022 223
- US-A1- 2019 130 926

## Beschreibung

Die Erfindung betrifft ein Verfahren zur Identifikation eines Störeffekts sowie ein Hörsystem.

Ein Hörsystem weist ein Hörgerät auf, welches von einem Nutzer am oder im Ohr getragen wird. Im Betrieb nimmt das Hörgerät Geräusche aus der Umgebung mittels eines oder mehrerer Mikrofone auf und erzeugt dabei elektrische Eingangssignale, welche über einen Hörer des Hörgeräts wieder in Geräusche umgewandelt und an den Nutzer ausgegeben werden. Die elektrischen Eingangssignale werden mittels einer Signalverarbeitung zu elektrischen Ausgangssignalen für den Hörer verarbeitet, um das Hörerlebnis und die Wahrnehmung der Geräusche an die persönlichen Bedürfnisse des Nutzers anzupassen. Typischerweise dient ein Hörgerät zur Versorgung eines hörgeschädigten Nutzers, d.h. zum Ausgleich eines Hördefizits des Nutzers. Die Signalverarbeitung verarbeitet die elektrischen Eingangssignale dann derart, dass das Hördefizit ausgeglichen wird.

Im Betrieb können an unterschiedlichen Stellen der Verarbeitung vom Aufnehmen der Geräusche bis zur Ausgabe an den Nutzer diverse Störeffekte auftreten. Beispiele für Störeffekte sind Windgeräusche, Pfeifen, d.h. Feedback, Artefakte, Dämpfung, Hall und dergleichen. Die Identifikation durch den Nutzer selbst ist oftmals schwierig, zumal der Nutzer typischerweise keine detaillierte Kenntnis von der Funktionsweise des Hörgeräts hat. Auch eine Beschreibung eines Störeffekts durch den Nutzer zwecks Identifikation durch einen Fachmann oder mittels einer Datenbank ist typischerweise schwierig, da dem Nutzer oftmals die Begriffe zur eindeutigen und klaren Beschreibung des Störeffekts fehlen.

Verschiedene Geräte, welche von einem Nutzer am Ohr getragen werden, sind beschrieben in US 2019/130 926 A1, DE 101 14 015 A1 und DE 10 2010 012 941 A1.

Vor diesem Hintergrund ist es eine Aufgabe der Erfindung, die Identifikation eines Störeffekts zur verbessern. Hierzu sollen ein verbessertes Verfahren sowie ein verbessertes Hörsystem angegeben werden. Die Identifikation soll möglichst zuverlässig und einfach sein.

Die Aufgabe wird erfindungsgemäß gelöst durch ein Verfahren mit den Merkmalen gemäß Anspruch 1 sowie durch ein Hörsystem mit den Merkmalen gemäß Anspruch 13 sowie durch ein Computerprogrammprodukt mit den Merkmalen gemäß Anspruch 14. Vorteilhafte Ausgestaltungen, Weiterbildungen und Varianten sind Gegenstand der Unteransprüche. Die Aufgabe wird weiterhin insbesondere jeweils eigenständig gelöst durch ein Hörgerät und durch ein Zusatzgerät, welche jeweils zur Durchführung des Verfahrens ausgebildet sind. Die Ausführungen im Zusammenhang mit dem Verfahren gelten sinngemäß auch für das Hörsystem, das Computerprogrammprodukt, das Hörgerät sowie das Zusatzgerät und umgekehrt. Sofern nachfolgend Verfahrensschritte des Verfahrens beschrieben werden, ergeben sich vorteilhafte Ausgestaltungen für das Hörsystem, das Hörgerät und das Zusatzsystem insbesondere dadurch, dass dieses ausgebildet ist, einen oder mehrere dieser Verfahrensschritte auszuführen.

Ein Kerngedanke der Erfindung ist insbesondere die Identifikation eines Störeffekts bei der Schallausgabe eines Hörgeräts mittels einfacher Meldungen durch den Nutzer, ohne von diesem eine genauere Beschreibung oder Charakterisierung des Störeffekts zu fordern. Vorteilhafterweise wird auf subjektive Beschreibungen oder Benennungen des Störeffekts durch den Nutzer verzichtet. Bei der Identifikation werden Merkmalswerte einer Situation ermittelt, in welcher der Nutzer einen Störeffekt wahrnimmt, ohne dass der Nutzer den Störeffekt im Detail beschreiben muss. Welche Maßnahme dann in Reaktion auf den Störeffekt gegebenenfalls getroffen wird, ist dagegen vorliegend zunächst nicht von Bedeutung. Durch die Identifikation des Störeffekts ist eine geeignete Maßnahme jedoch besonders zielgerichtet und optimal auswählbar.

Das Verfahren dient allgemein zum Betrieb eines Hörsystems und ist speziell ein Verfahren zur Identifikation eines Störeffekts. Unter "Störeffekt" wird insbesondere eine nicht-optimale oder nicht-ordnungsgemäße Verarbeitung durch das Hörsystem verstanden, welche sich für den Nutzer hörbar auswirkt. Unter "Identifikation" wird insbesondere verstanden, dass erkannt wird, um welchen Störeffekt es sich tatsächlich handelt, dass der Störeffekt also irgendwie beschrieben oder charakterisiert wird oder sogar explizit benannt oder bezeichnet wird, um dann mit einer geeigneten Maßnahme darauf zu reagieren. Der Störeffekt ist allgemein ein vom Nutzer hörbarer Effekt bei der Schallausgabe, durch welchen diese Schallausgabe für den Nutzer subjektiv nicht-optimal, fehlerhaft, unzulänglich, falsch oder sonstwie defizitär wahrgenommen wird. Beispiele für Störeffekte sind Windgeräusche, Kammfiltereffekte, Rückkopplungseffekte, Echo, Pfeifen, Knallen, Klirren, Gesprächsgeräusche, Artefakte, Hall, zu hohe oder zu niedrige Lautstärke, zu scharfer oder zu dumpfer Klang und dergleichen.

Das Hörsystem weist ein Hörgerät auf, welches von einem Nutzer getragen wird, zur Schallausgabe an den Nutzer. Vorzugsweise weist das Hörgerät zumindest ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Signalverarbeitung ist vorzugsweise ein Teil einer Steuereinheit des Hörgeräts. Das Hörgerät dient vorzugsweise zur Versorgung eines hörgeschädigten Nutzers. Die Modifikation erfolgt hierzu insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird. Vorzugsweise ist das Hörgerät ein binaurales Hörgerät, mit zwei Einzelgeräten, welche jeweils zumindest ein Mikrofon und einen Hörer aufweisen und welche vom Nutzer auf unterschiedlichen Seiten des Kopfs getragen werden, nämlich einmal am oder im linken Ohr und einmal am oder im rechten Ohr.

Das Hörsystem ist ausgebildet, von dem Nutzer wiederkehrend eine Meldung derart zu empfangen, dass bei der Schallausgabe ein Störeffekt vorliegt. Der Störeffekt muss dem Nutzer dabei nicht bekannt sein, vielmehr ist es vorliegend ausreichend, dass lediglich das Vorliegen eines Störeffekts meldbar ist. Eine Beschreibung, Charakterisierung oder Ähnliches des Störeffekts wird vom Nutzer insbesondere nicht verlangt. Um eine Meldung vom Nutzer zu empfangen weist das Hörsystem zweckmäßigerweise ein Eingabeelement auf, z.B. einen Schalter, einen Knopf oder ein Mikrofon zur Spracheingabe. Das Eingabeelement ist Teil des Hörgeräts oder Teil eines Zusatzgeräts des Hörsystems. Ein geeignetes Zusatzgerät ist insbesondere ein mobiles Endgerät, z.B. ein Smartphone. Durch Betätigen des Eingabeelements ist eine Meldung erzeugbar. Dabei reicht es wie bereits beschrieben aus, dass überhaupt eine Meldung erfolgt, wodurch der Störeffekt ohne weitere Charakterisierung lediglich angezeigt wird.

Falls der Nutzer in einer aktuellen Situation einen Störeffekt meldet, werden vom Hörsystem mehrere Merkmalswerte der aktuellen Situation ermittelt und als ein Merkmalswertsatz gespeichert. Die aktuelle Situation ist diejenige Situation, welche zu einem gegebenen Zeitpunkt vorliegt. Eine Situation ist insbesondere durch Merkmalswerte der Umgebung und/oder des Hörsystems charakterisiert. Solche Merkmalswerte sind insbesondere Parameter oder Eigenschaften der Umgebung oder des Hörsystems. Beispiele für Merkmalswerte der Umgebung sind Lautstärke, Stärke von Störgeräuschen, Vorhandensein bestimmter Schallquellen, z.B. Sprache, Musik oder Rauschen. Auch Merkmalswerte, welche den Nutzer betreffen, z.B. dessen Geschwindigkeit, sind Merkmalswerte der Umgebung. Beispiele für Merkmalswerte des Hörsystems sind Merkmalswerte des Hörgeräts, allgemein eine Einstellung des Hörgeräts, speziell beispielsweise Verstärkung in der Signalverarbeitung, Konfiguration eines Filters oder eines Kompressors oder eines sonstigen Teils des Signalverarbeitung.

Sobald das Hörsystem eine Meldung empfängt, werden mehrere Merkmalswerte der aktuellen Situation gespeichert, insbesondere zusammen mit der Information, dass ein Störeffekt vorliegt. Die Merkmalswerte bilden dabei einen Merkmalswertsatz, von welchem aufgrund der Meldung bekannt ist, dass für diesen Merkmalswertsatz ein Störeffekt vorliegt. Die Merkmalswerte beschreiben dabei die Situation insbesondere in zeitlicher und/oder räumlicher Nähe der Meldung, d.h. die Merkmalswerte kennzeichnen die Umgebung und/oder das Hörsystem zum Zeitpunkt der Meldung oder in einem Zeitfenster von insbesondere maximal 10 Sekunden, bevorzugt maximal 5 Sekunden oder sogar noch weniger, um den Zeitpunkt der Meldung herum. Beispielsweise werden fortlaufend Merkmalswerte erfasst und zwischengespeichert und dann bei einer Meldung dauerhaft gespeichert, um speziell Merkmalswerte vor der eigentlichen Meldung zu erhalten, welche besonders aussagekräftig sind, da diese voraussichtlich zu der Meldung geführt haben, während Merkmalswerte nach der Meldung typischerweise, jedoch nicht zwingend weniger relevant sind. Unter "räumlicher Nähe" wird insbesondere verstanden, dass die Merkmalswerte das Hörsystem selbst kennzeichnen oder die Umgebung insbesondere in Hörweite des Nutzers, genauer in einer Reichweite, in welcher noch Schallsignale vom Hörgerät aufgenommen werden. Diese Reichweite ist typischerweise stark abhängig von der Schallquelle, welche ein Schallsignal aussendet.

Eine Identifikationseinheit vergleicht nun mehrere gespeicherte Merkmalswertsätze miteinander und ermittelt dabei diejenigen Merkmalswerte, welche in den mehreren Merkmalswertsätzen übereinstimmen und welche dann als charakteristische Merkmalswerte des Störeffekts angenommen werden, sodass die Identifikationseinheit den Störeffekt anhand der charakteristischen Merkmalswerte identifiziert. Somit werden mehrere Meldungen des Nutzers ausgewertet und damit aufgrund wiederkehrender Meldungen ermittelt, welche Merkmalswerte wiederkehrend vorliegen und damit charakteristisch sind für den Störeffekt, welcher auf diese Weise identifiziert wird. Die charakteristischen Merkmalswerte, vorzugsweise zuzüglich eines Toleranzbereichs, beschreiben somit bereits den Störeffekt, sodass durch die Identifikationseinheit eine Identifikation des Störeffekts erfolgt, nämlich wenigstens insofern, als dass dieser nunmehr durch die charakteristischen Merkmalswerte beschrieben wird. Die Merkmalswertsätze werden von der Identifikationseinheit ausgewertet, wie dies genau geschieht, ist von untergeordneter Bedeutung, relevant ist vorrangig, dass die charakteristischen Merkmalswerte ermittelt werden. Dabei werden beispielsweise solche Merkmalswerte verschiedener Merkmalswertsätze als ähnlich angenommen, welche innerhalb eines vorgegebenen Intervalls liegen oder sich höchstens um einen Maximalwert voneinander unterscheiden.

Die charakteristischen Merkmalswerte sind prinzipbedingt zur Identifikation des Störeffekts besonders geeignet und werden daher hierzu auch verwendet. Dabei ist es zunächst unerheblich, wie genau die charakteristischen Merkmalswerte ausgestaltet sind, insbesondere da diese für jeden Störeffekt typischerweise unterschiedlich sind, also vom konkreten Störeffekt abhängen. Relevanter ist jedenfalls, dass die charakteristischen Merkmalswerte den Störeffekt kennzeichnen und reproduzierbar vorliegen, wenn der Störeffekt auftritt, sodass ein kausaler Zusammenhang zwischen den charakteristischen Merkmalswerten und dem Störeffekt wahrscheinlich ist. Im Rahmen des Verfahrens werden vom Hörsystem mehrere Meldungen entgegengenommen. Dadurch, dass der Nutzer wiederkehrend den Störeffekt meldet, werden mit der Zeit immer genauer die charakteristischen Merkmalswerte ermittelt, sodass eine Identifikation des Störeffekts anhand der charakteristischen Merkmalswerte möglich ist und mit weiteren Meldungen auch immer genauer wird, ohne dass der Nutzer den Störeffekt selbst in irgendeiner Weise charakterisieren muss. Die charakteristischen Merkmalswerte bilden sozusagen einen Fingerabdruck des Störeffekts, sodass dieser identifizierbar ist.

Die Identifikationseinheit ist insbesondere ein Teil des Hörsystems. Vorzugsweise ist die Identifikationseinheit ein Teil des Hörgeräts oder ein Teil eines Zusatzgeräts des Hörsystems oder auf diese verteilt. Ein geeignetes Zusatzgerät ist beispielsweise ein mobiles Endgerät, wie oben bereits beschrieben, oder ein Server, welcher über ein Netzwerk zum Datenaustausch mit dem Hörgerät und/oder einem mobilen Endgerät des Hörsystems verbunden ist.

Ein Vorteil der Erfindung ist insbesondere, dass ein Störeffekt ohne genauere Angaben durch den Nutzer einfach und zuverlässig identifiziert wird. Sobald ein Störeffekt identifiziert ist, kann mit einer entsprechenden Maßnahme darauf reagiert werden, sodass insgesamt der Betrieb des Hörsystems, speziell die Schallausgabe des Hörgeräts verbessert wird und die Akzeptanz durch den Nutzer gesteigert wird. Die Maßnahme wird zweckmäßigerweise anhand der ermittelten charakteristischen Merkmalswerte ausgewählt, welche prinzipbedingt eine gute Beschreibung des Störeffekts darstellen und diesen dadurch identifizierbar machen oder sogar direkt identifizieren. Im Gegensatz zu subjektiven Beschreibungen oder Charakterisierungen eines Störeffekts durch den Nutzer wie z.B. "zu laut", "hohl", "dumpf", "pfeifend" oder Ähnlichem, stellen die charakteristischen Merkmalswerte eine objektive Beschreibung des Störeffekts dar, welche zu einer zuverlässigeren Identifikation beiträgt.

Eine Ermittlung der charakteristischen Merkmalswerte zwecks Identifikation des Störeffekts erfolgt durch die Identifikationseinheit insbesondere automatisch. Die Identifikationseinheit bestimmt in einer bevorzugten Ausgestaltung, mit welcher Wahrscheinlichkeit ein jeweiliger von mehreren vordefinierten, d.h. vorbekannten Störeffekten vorliegt, d.h. welcher Störeffekt einer jeweiligen Meldung mit welcher Wahrscheinlichkeit zugrunde liegt. Die Wahrscheinlichkeiten zu einer einzelnen Meldung bilden dann einen Wahrscheinlichkeitssatz. Ein jeweiliger Wahrscheinlichkeitssatz wird auch als Fehlerdefinition bezeichnet, da dieser angibt, welcher Störeffekt vermutlich vorliegt und diesen somit durch die einzelnen Wahrscheinlichkeiten definiert. Jede Meldung erzeugt somit ein Datenpaar aus einem Merkmalswertsatz und einem Wahrscheinlichkeitssatz. Diese Datenpaare werden insbesondere vom Hörsystem gesammelt und die Identifikationseinheit ermittelt daraus den wahrscheinlichsten Störeffekt, sodass dieser identifiziert wird. Beispielsweise werden in einer geeigneten Ausgestaltung einfach bei jeder Meldung die Wahrscheinlichkeiten zu jedem vorbekannten Störeffekt addiert und dann der Störeffekt als derjenige der vorbekannten Störeffekte identifiziert, welcher die höchste Wahrscheinlichkeit aufweist. In einer anderen geeigneten Ausgestaltung wird bei jeder Meldung einfach ein Zähler für denjenigen der vorbekannten Störeffekte erhöht, welcher die höchste Wahrscheinlichkeit aufweist und dann der Störeffekt als derjenige der vorbekannten Störeffekte identifiziert, welcher den höchsten Zähler aufweist. Damit wird der Störeffekt vorteilhaft auch bei gelegentlicher Falschinformation durch den Nutzer oder bei variierenden Ursachen zuverlässig identifiziert.

Die Identifikationseinheit ist insbesondere eine Art intelligenter Klassifikator für Störeffekte. Der Identifikationseinheit werden die Merkmalswerte in Form eines Merkmalswertsatzes, darunter insbesondere die charakteristischen Merkmalswerte als Eingangsparameter zugeführt und als Ausgangsparameter gibt die Identifikationseinheit beispielsweise eine Wahrscheinlichkeit für das Vorliegen eines vorbekannten Störeffekts aus oder mehrere Wahrscheinlichkeiten jeweils für das Vorliegen eines von mehreren vorbekannten Störeffekten. Als Identifikationseinheit ist besonders eine künstliche Intelligenz geeignet, insbesondere mit einem neuronalen Netz oder mit einer Clusteranalyseeinheit, welche z.B. einen k-means-Algorithmus verwendet.

Bei einem neuronalen Netz sind beispielsweise mehrere Layer von Knoten derart über geeignete Gewichtungen verbunden, dass bei Zufuhr eines Merkmalswertsatzes als Eingangsparameter ein entsprechender Wahrscheinlichkeitssatz als Ausgangsparameter ausgegeben wird, welcher für mehrere Störeffekte jeweils eine Wahrscheinlichkeit enthält, dass dieser vorliegt. Die Wahrscheinlichkeiten werden dann von der Identifikationseinheit zweckmäßigerweise wie oben bereits beschrieben weiterverarbeitetet, um einen der Störeffekte auszuwählen und somit konkret zu identifizieren. Bei einer Clusteranalyseeinheit bilden die Merkmalswertsätze beispielsweise für jeden vorbekannten Störeffekt einen Cluster oder Raumbereich. Bei Zufuhr eines Merkmalswertsatzes als Eingangsparameter für die Clusteranalyseeinheit gibt diese dann beispielsweise als Ausgangsparameter die Abstände des Merkmalswertsatzes zu den verschiedenen Clustern aus, also effektiv die Wahrscheinlichkeit, mit welcher der Merkmalswertsatz einem der Cluster angehört und mit welcher der entsprechende Störeffekt vorliegt. Die Weiterverarbeitung erfolgt vorzugsweise durch die Identifikationseinheit analog zu den Ausführungen zum neuronalen Netz.

Bevorzugterweise ist die Identifikationseinheit mit vorbekannten Zuordnungen von Störeffekten zu charakteristischen Merkmalswerten vortrainiert. Dies erfolgt im Voraus mittels eines Vortrainings, welches nicht zwingend ein Teil des hier beschriebenen Verfahrens ist. Die Zuordnungen sind insbesondere Trainingsdaten, auch als Grunddaten bezeichnet, welche im Voraus erzeugt wurden, um die Identifikationseinheit zu trainieren. Dabei wird zweckmäßigerweise eine Vielzahl von Situationen kontrolliert simuliert, um in solchen kontrollierten Situationen diverse Störeffekte bei bekannten Merkmalswerten zu erzeugen. Es werden also Datenpaare aus Merkmalswertsätzen und Wahrscheinlichkeitssätzen durch Versuche ermittelt und erzeugt und zum Training der Identifikationseinheit genutzt. Beispielsweise werden werkseitig in einer Auswahl von Standardsituationen durch gezielte Auswahl und/oder Einstellung von Parametern der Umgebung und des Hörsystems, also durch gezielte Einstellung von bestimmten Merkmalswerten, diverse Störeffekte provoziert. Diese Störeffekte werden vorzugsweise von Fachleuten oder anderweitig und jedenfalls korrekt identifiziert und als vorbekannte Störeffekte definiert. Zweckmäßigerweise werden die Standardsituationen variiert, um hierzu ähnliche, neue Situationen zum Vortrainieren zu erhalten und die Datenbasis für das Training der Identifikationseinheit zu erhöhen und auf effiziente Weise eine Vielzahl an Trainingsdaten zu erhalten. Das Ergebnis, d.h. der jeweils provozierte Störeffekt, ist dabei dann ebenfalls jeweils bekannt.

In einer zweckmäßigen Ausgestaltung ist die Identifikationseinheit mit Trainingsdaten vortrainiert, welche einerseits reale und andererseits künstliche Trainingsdaten enthalten. Die realen Trainingsdaten sind vorbekannte Zuordnungen von vorbekannten Merkmalswerten zu Störeffekten. Die realen Trainingsdaten werden beispielsweise durch Messungen und/oder Versuche erzeugt, indem zu einem bestimmten Störeffekt die zugehörigen Merkmalswerte bestimmt werden. Die künstlichen Trainingsdaten sind dann ausgehend von den realen Trainingsdaten dadurch erzeugt, dass aus den vorbekannten Merkmalswerten zu einem jeweiligen Störeffekt durch Abwandlung innerhalb eines Toleranzbereichs, neue Merkmalswerte erzeugt sind, welche dem gleichen Störeffekt zugeordnet sind. Hierbei werden insbesondere keine Messungen und/oder Versuche durchgeführt, vielmehr wird angenommen, dass die Merkmalswerte zu einem Störeffekt nicht zwingend diskret sind, sondern innerhalb eines Toleranzbereichs abweichen können, ohne dass sich der Störeffekt maßgeblich ändert. Daher wird zur Erzeugung der künstlichen Trainingsdaten gezielt eine geringfügige Variation der Merkmalswerte zu einem Störeffekt derart erzeugt, dass der Störeffekt sich nicht Wesentlich ändert oder zumindest nicht verschwindet, sodass dann neue Merkmalswerte für diesen Störeffekt gefunden werden. Auf diese Weise wird durch die zusätzlichen künstlichen Trainingsdaten sozusagen ein Merkmalswertsraum erzeugt, welcher dem Störeffekt dann zugeordnet ist.

Grundsätzlich ist es möglich, dass die Identifikation des Störeffekts nicht oder nicht eindeutig möglich ist, z.B. nicht eindeutig ausfällt, sondern mehrere Störeffekte in Frage kommen.

Zweckmäßigerweise wird daher das Verfahren mehrmals durchlaufen, vorzugsweise bis für einen von mehreren möglichen Störeffekten eine bestimmte Wahrscheinlichkeit erreicht ist. Vorzugsweise werden Trivialfehler durch zu wenige Meldungen dadurch vermieden, dass eine Mindestanzahl an Meldungen für den Störeffekt gefordert ist. In einer geeigneten Ausgestaltung erfolgt hierzu eine Maßnahme gegen den Störeffekt erst dann, wenn eine bestimmte Mindestanzahl an Meldungen für diesen Störeffekt vorliegt. Geeignete Mindestanzahlen sind beispielsweise 2 bis 5 oder 2 bis 10, andere Mindestanzahlen können aber grundsätzlich auch geeignet sein.

Alternativ oder zusätzlich wird eine Identifikation nicht mehr vorgenommen und jedenfalls keine Maßnahme ergriffen, wenn eine zu große Anzahl an Meldungen vorhanden ist und der Störeffekt z.B. dann nicht mehr identifizierbar ist, weil keine charakteristischen Merkmalswerte mehr gefunden werden können oder allgemein keine eindeutige Identifikation mehr möglich ist. In einer geeigneten Ausgestaltung wird hierzu der Störeffekt lediglich solange identifiziert, bis eine bestimmte Maximalanzahl an Meldungen für diesen Störeffekt erreicht ist. Mit anderen Worten: der Störeffekt wird nicht identifiziert, wenn eine bestimmte Maximalanzahl an Meldungen für diesen Störeffekt vorliegt. Geeignete Maximalanzahlen sind beispielsweise 10 bis 100, bevorzugt 10 bis 50, besonders bevorzugt 15 bis 35. Andere Maximalanzahlen können aber grundsätzlich auch geeignet sein. Sobald die Maximalanzahl erreicht ist, wird zweckmäßigerweise vom Hörsystem ein Hinweis an den Nutzer ausgegeben, bezüglich des vermeintlichen Störeffekts Kontakt zu Fachpersonal aufzusuchen oder das Hörsystem vermittelt direkt einen solchen Kontakt.

Zweckmäßigerweise wird zur Unterscheidung verschiedener Störeffekte ein jeweiliger Merkmalswertsatz kategorisiert und hierbei einer Gruppe zugeordnet, sodass jedem Störeffekt eine Gruppe von Merkmalswertsätzen zugeordnet ist. Beim Ermitteln übereinstimmender Merkmalswerte werden dann lediglich die Merkmalswertsätze einer einzelnen Gruppe miteinander verglichen. Auf diese Weise werden vorteilhaft mehrere unterschiedliche Störeffekte identifiziert. Dadurch ist es für den Nutzer möglich, dem Hörsystem unterschiedliche Störeffekte mit einer einfachen Meldung anzuzeigen. Unterschiedliche Störeffekte bilden jeweils eine Kategorie und sind durch eine Gruppe von Merkmalswertsätzen beschrieben, welche eine Teilmenge aller Merkmalswertsätze ist. Die Merkmalswertsätze werden kategorisiert, d.h. es erfolgt eine Kategorisierung der Merkmalswertsätze. Ziel der Kategorisierung ist noch nicht die tatsächliche Identifikation der Störeffekte, sondern lediglich die Gruppierung der Merkmalswertsätze in Gruppen, welche jeweils zumindest wahrscheinlich den gleichen Störeffekt kennzeichnen. Die Merkmalswertsätze werden vorzugsweise anhand deren Ähnlichkeit zueinander verschiedenen Gruppen zugeordnet, sodass ähnliche Merkmalswertsätze zur gleichen Gruppe gehören, da diese wahrscheinlich den gleichen Störeffekt kennzeichnen, und unterschiedliche Merkmalswertsätze zu unterschiedlichen Gruppen gehören, da diese wahrscheinlich unterschiedliche Störeffekte kennzeichnen.

Die Kategorisierung erfolgt automatisch durch das Hörsystem oder manuell durch den Nutzer. Auch eine Kombination ist vorteilhaft.

In einer vorteilhaften Ausgestaltung wird ein jeweiliger Merkmalswertsatz automatisch kategorisiert, indem dieser mit bereits gespeicherten Merkmalswertsätzen verglichen wird und derjenigen Gruppe zugeordnet wird, welche den hierzu ähnlichsten Merkmalswertsatz enthält. Die Kategorisierung wird hierbei durch das Hörsystem selbst anhand einer Ähnlichkeitsbetrachtung verschiedener Merkmalswertsätze vorgenommen. Ähnliche Merkmalswertsätze werden der gleichen Gruppe zugeordnet, wohingegen unähnliche Merkmalswertsätze unterschiedlichen Gruppen zugeordnet werden. Wie die Ähnlichkeit bestimmt wird, ist von untergeordneter Bedeutung. Als Maß für die Ähnlichkeit dient beispielsweise eine mittlere Abweichung der Merkmalswerte zweier Merkmalswertsätze zueinander.

In einer weiteren, vorteilhaften Ausgestaltung wird ein jeweiliger Merkmalswertsatz kategorisiert, indem vom Nutzer zum Zeitpunkt der Meldung oder später erfragt wird, ob der zugehörige Störeffekt bereits zuvor gemeldet worden ist, und indem weiter der jeweilige Merkmalswertsatz derjenigen Gruppe mit dem hierzu ähnlichsten Merkmalswertsatz zugeordnet wird, falls der zugehörige Störeffekt zuvor bereits gemeldet worden ist, und andernfalls einer neuen Gruppe. Auf diese Weise erfolgt eine manuelle Kategorisierung, ohne vom Nutzer weitere Details zum Störeffekt zu verlangen, denn speziell bei der manuellen Kategorisierung ist von Bedeutung, dass auch hier vom Nutzer noch keine Beschreibung oder Charakterisierung des Störeffekts gefordert wird. Vielmehr wird lediglich eine relative Angabe, nämlich ob der Störeffekt zuvor bereits aufgetreten ist oder zum ersten Mal auftritt. Dadurch lässt sich die Genauigkeit der Kategorisierung deutlich verbessern. Auf eine absolute Angabe, d.h. welcher Störeffekt der Meinung des Nutzers nach vorliegt oder welche Eigenschaften der Störeffekt dem subjektiven Empfinden des Nutzers nach hat, wird dagegen vorteilhafterweise verzichtet.

In einer geeigneten Ausgestaltung sind automatische und manuelle Kategorisierung derart kombiniert, dass die Identifikationseinheit den Merkmalswertsatz automatisch kategorisiert und das Ergebnis dem Nutzer zur Bestätigung oder Ablehnung ausgibt. Demnach erkennt die Identifikationseinheit automatisch, ob der Störeffekt bereits aufgetreten ist oder nicht und lässt dieses Ergebnis vom Nutzer verifizieren.

Zweckmäßigerweise wird als eine Maßnahme gegen den Störeffekt anhand der charakteristischen Merkmalswerte eine Einstellung für das Hörgerät ermittelt, welche den Störeffekt reduziert, und welche dann automatisch eingestellt wird oder dem Nutzer vorgeschlagen wird. Beide Varianten stellen jeweils eine Maßnahme dar, um auf den Störeffekt zu reagieren, insbesondere um diesen zu beseitigen oder zukünftig auszuschließen oder zu verhindern. Da der Störeffekt nun anhand der charakteristischen Merkmalswerte identifiziert ist, wird dann beispielsweise in einer entsprechenden Datenbank für diesen Störeffekt eine Einstellung nachgeschlagen oder anhand einer Rechenvorschrift errechnet.

Die Merkmalswertsätze werden bevorzugterweise in einer zentralen Datenbank gesammelt, zur zentralisierten Auswertung und jeweiligen Zuordnung zu einem Störeffekt. Dabei werden zweckmäßigerweise die Merkmalswertsätze von mehreren Hörsystemen in der Datenbank gesammelt und dadurch zusammengeführt, zur gemeinsamen Auswertung. Die Datenbank ist beispielsweise über das Internet mit diversen Hörsystemen verbindbar und/oder verbunden. Vorzugsweise werden auch die oben beschriebenen Gruppen in der Datenbank abgebildet, d.h. das Ergebnis einer eventuellen Kategorisierung wird ebenfalls in der Datenbank gespeichert und verwertet. Die zentralisierte Auswertung erfolgt zweckmäßigerweise durch Fachleute, z.B. Audiologen, welchen die Merkmalswertsätze und die durch diese identifizierten Störeffekte vorgelegt werden, um geeignete Einstellung zu deren Vermeidung anzugeben. Dadurch werden fortlaufend verbesserte Maßnahmen zur Verhinderung von Störeffekten bereitgestellt. Die Einstellungen werden vorzugsweise von der Datenbank an ein jeweiliges Hörsystem übermittelt oder von diesem abgefragt, um bei Identifikation eines bestimmten Störeffekts entsprechend zu reagieren.

Geeigneterweise ist zumindest eines der Merkmalswerte ein Betriebsparameter des Hörgeräts in der aktuellen Situation, genauer gesagt ein Wert eines Betriebsparameters des Hörgeräts. Der Betriebsparameter ist beispielsweise eine Lautstärke, eine Verstärkung, eine Kompression, eine Einstellung eines Filters, eine Richtung oder Breite eines Beamformers oder dergleichen.

Alternativ oder zusätzlich ist geeigneterweise zumindest eines der Merkmalswerte ein Umgebungsparameter, genauer gesagt ein Wert eines Umgebungsparameter, welcher mit einem Sensor des Hörsystem in der aktuellen Situation gemessen wird. Der Sensor erzeugt insbesondere einen Messwert, welcher dann als Merkmalswert verwendet wird. Der Umgebungsparameter ist beispielsweise eine Störgeräuschlautstärke, das Vorhandensein einer bestimmten Geräuschart, z.B. Sprache oder Musik, eine Geschwindigkeit, mit welcher der Nutzer sich und somit auch das Hörgerät bewegt, eine Richtung einer Schallquelle, eine Temperatur oder dergleichen. Der Sensor ist beispielsweise ein Mikrofon, ein Richtmikrofon, ein Beschleunigungssensor, ein Bewegungssensor, ein Temperatursensor, ein GPS-Sensor oder dergleichen.

Nachfolgend wird ein beispielhafter Anwendungsfall für das Verfahren beschrieben, um dessen Ablauf zu verdeutlichen. Die Identifikationseinheit ist vortrainiert mit Merkmalswertsätzen zu einem Störeffekt, welcher durch Wind am Hörgerät in verschiedenen Umgebungen entsteht, der Störeffekt ist demnach "Windgeräusche". Die Identifikationseinheit ist ein Teil eines Servers, mit welchem ein Hörgerät über ein Smartphone verbunden ist. Der Server, das Smartphone und das Hörgerät bilden hier ein Hörsystem. Alternativ ist die Identifikationseinheit nicht Teil eines Servers, sondern Teil des Hörgeräts oder des Smartphones. Der Nutzer trägt das Hörgerät, welches beispielsweise ein binaurales Hörgerät ist, bei welchem jedes der Einzelgeräte zwei Mikrofone aufweist, welche insbesondere in unterschiedliche Richtungen weisen oder an unterschiedlichen Positionen am jeweiligen Einzelgerät angeordnet sind. Der Nutzer fährt nun Fahrrad und bemerkt ein störendes Geräusch. Der Nutzer betätigt ein Eingabeelement am Hörgerät oder am Smartphone, z.B. eine Taste oder tätigt eine Spracheingabe, und erzeugt auf diese Weise eine Meldung, welche vom Hörsystem entgegengenommen wird. Optional fordert das Hörsystem den Nutzer zusätzlich auf, anzugeben, ob der Störeffekt zuvor schon einmal aufgetreten ist oder nicht, um diesen gegebenenfalls zu kategorisieren. Zur möglichst sicheren Identifikation des Störeffekts sind typischerweise mehrere Meldungen dieses Störeffekts erforderlich. Auf die Meldung hin ermittelt das Hörgerät diverse Merkmalswerte der Situation, z.B. Betriebs- und Umgebungsparameter, speichert diese als Merkmalswertsatz und übermittelt diesen an die Identifikationseinheit. Im vorliegenden Beispiel sind die Merkmalswerte ein jeweiliger Mikrofonpegel der Mikrofone, Messdaten eines Bewegungssensors, eine aktuell eingestellte Verstärkung der Signalverarbeitung des Hörgeräts sowie ein aktuell eingestelltes Betriebsprogramm des Hörgeräts. Die Identifikationseinheit verwendet die Merkmalswerte des Merkmalswertsatzes als Eingangsparameter und bestimmt die charakteristischen Merkmalswerte durch Vergleich mit zuvor gemeldeten Merkmalswertsätzen zum gleichen Störeffekt. Anhand der charakteristischen Merkmalswerte wird dann in Verbindung mit dem Vortraining der Identifikationseinheit von dieser der Störeffekt identifiziert. Anhand dessen ermittelt das Hörsystem eine neue Einstellung für das Hörgerät, um den Störeffekt zukünftig zu verhindern. Die neue Einstellung wird entweder errechnet oder von einer Datenbank abgerufen und über das Smartphone an das Hörgerät übermittelt. Im vorliegenden Beispiel weisen die Merkmalswerte, speziell die Messdaten des Bewegungssensors auf eine rasche Bewegung des Nutzers hin, die Verstärkung befindet sich dagegen nicht in einem kritischen Bereich. Die Identifikationseinheit schließt daraus, dass der Störeffekt durch Wind verursachte Artefakte sind, d.h. Windgeräusche. Dies ergibt sich aus dem Vortraining der Identifikationseinheit. Als neue Einstellung wird dann eingestellt oder vorgeschlagen, von den jeweils zwei Mikrofonen eines Einzelgeräts dasjenige Mikrofon vorrangig oder ausschließlich zu verwenden, welches im Vergleich mit dem anderen Mikrofon weniger Windgeräusche aufweist. Der Nutzer kann nun diese neue Einstellung testen und übernehmen oder verwerfen. Alternativ wird die neue Einstellung direkt eingestellt und verwendet.

Ein erfindungsgemäßes Hörsystem ist ausgebildet zur Durchführung eines Verfahrens wie vorstehend beschrieben. Vorzugsweise weist das Hörsystem hierzu eine Steuereinheit auf. In der Steuereinheit ist das Verfahren insbesondere programmtechnisch oder schaltungstechnisch realisiert oder eine Kombination hiervon. Beispielswiese ist die Steuereinheit hierfür als ein Mikroprozessor oder als ein ASIC ausgebildet oder als eine Kombination hiervon. Die Steuereinheit ist auf das Hörgerät und das Zusatzgerät aufgeteilt oder vollständig in das Hörgerät oder in das Zusatzgerät integriert. Die Verwendung eines Zusatzgerätes ist an sich nicht zwingend, vielmehr weist in einer möglichen Ausgestaltung das Hörsystem lediglich ein Hörgerät auf, welches dann zur Durchführung des Verfahrens ausgebildet ist. Grundsätzlich lassen sich die oben beschriebenen Verfahrensschritte weitgehend beliebig auf das Zusatzgerät und das Hörgerät aufteilen.

Das erfindungsgemäße Computerprogrammprodukt enthält ein ausführbares Programm, welches bei oder nach einer Installation auf einem Hörsystem wie oben beschrieben das Verfahren wie oben beschrieben automatisch ausführt. Das Programm wird entweder auf dem Hörgerät oder auf dem Zusatzgerät installiert oder beides.

Nachfolgend werden Ausführungsbeispiele der Erfindung anhand einer Zeichnung näher erläutert. Darin zeigen jeweils schematisch:
- Fig. 1: ein Hörsystem,
- Fig. 2: ein Verfahren.

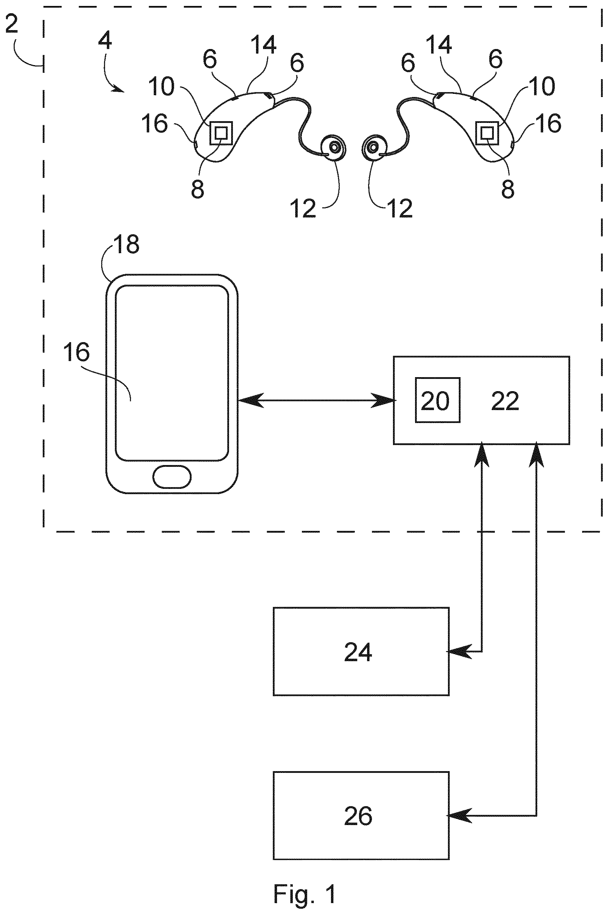

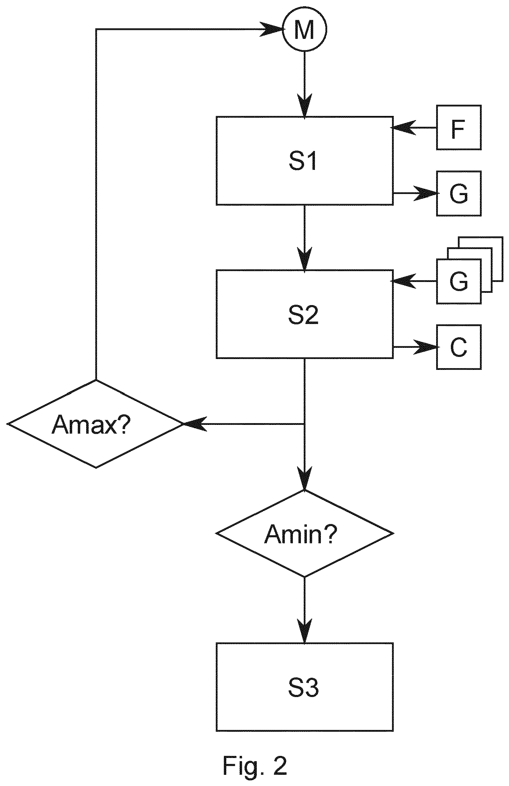

Ein Ausführungsbeispiel eines erfindungsgemäßen Hörsystems 2 ist in Fig. 1 dargestellt. Das Hörsystem 2 weist ein Hörgerät 4 auf, welches von einem nicht explizit gezeigten Nutzer getragen wird, zur Schallausgabe an den Nutzer. Bei der Schallausgabe tritt möglicherweise ein Störeffekt auf. In Fig. 2 ist ein Flussdiagramm eines beispielhaften Verfahrens zur Identifikation des Störeffekts gezeigt. Ein Kerngedanke ist dabei, dass der Störeffekt identifiziert wird mittels einer einfachen Meldung M durch den Nutzer, ohne von diesem eine genauere Beschreibung oder Charakterisierung des Störeffekts zu fordern. Bei der Identifikation werden Merkmalswerte F einer Situation ermittelt, in welcher der Nutzer den Störeffekt wahrnimmt, ohne dass der Nutzer den Störeffekt im Detail beschreiben muss.

Das gezeigte Hörgerät 4 weist zumindest ein Mikrofon 6 auf, welches Schall aus der Umgebung aufnimmt und ein elektrisches Eingangssignal erzeugt. Dieses wird zur Modifikation einer Signalverarbeitung 8 des Hörgeräts 4 zugeführt. Die Signalverarbeitung 8 ist ein Teil einer Steuereinheit 10 des Hörgeräts 4. Das gezeigte Hörgerät 4 dient zur Versorgung eines hörgeschädigten Nutzers. Die Modifikation erfolgt hierzu anhand eines individuellen Audiogramms des Nutzers, welcher dem Hörgerät 4 zugeordnet ist, sodass ein individuelles Hördefizit des Nutzers ausgeglichen wird. Die Signalverarbeitung 8 gibt als Ergebnis ein elektrisches Ausgangssignal aus, welches dann über einen Hörer 12 des Hörgeräts 2 wieder in Schall umgewandelt wird und an den Nutzer ausgegeben wird. Das gezeigte Hörgerät 4 ist ein binaurales Hörgerät 4, mit zwei Einzelgeräten 14, welche jeweils zumindest ein Mikrofon 6 und einen Hörer 12 aufweisen und welche vom Nutzer auf unterschiedlichen Seiten des Kopfs getragen werden, nämlich einmal am oder im linken Ohr und einmal am oder im rechten Ohr.

Das Verfahren dient allgemein zum Betrieb eines Hörsystems 2, z.B. wie in Fig. 1 gezeigt, und ist speziell ein Verfahren zur Identifikation eines Störeffekts. Der Störeffekt ist allgemein ein vom Nutzer hörbarer Effekt bei der Schallausgabe durch das Hörgerät 4. Durch den Störeffekt wird diese Schallausgabe für den Nutzer subjektiv nicht optimal, fehlerhaft, unzulänglich, falsch oder sonstwie defizitär wahrgenommen wird.

Das Hörsystem 2 ist ausgebildet, von dem Nutzer wiederkehrend eine Meldung M derart zu empfangen, dass bei der Schallausgabe ein Störeffekt vorliegt. Der Störeffekt muss dem Nutzer dabei nicht bekannt sein, vielmehr ist es vorliegend ausreichend, dass lediglich das Vorliegen eines Störeffekts meldbar ist. Um eine Meldung M vom Nutzer zu empfangen, d.h. entgegenzunehmen, weist das Hörsystem 2 hier ein Eingabeelement 16 auf, z.B. einen Schalter, einen Knopf oder ein Mikrofon zur Spracheingabe. Wie in Fig. 1 gezeigt ist das Eingabeelement 16 beispielsweise ein Teil des Hörgeräts 4 oder ein Teil eines Zusatzgeräts 18 des Hörsystems 2. Das in Fig. 1 beispielhaft gezeigte Zusatzgerät 18 ist ein mobiles Endgerät, hier speziell ein Smartphone. Durch Betätigen des Eingabeelements 16 ist eine Meldung M erzeugbar, welche in einem ersten Schritt S1 des Verfahrens wie in Fig. 2 erkennbar vom Hörsystem 2 entgegengenommen wird.

Falls der Nutzer in einer aktuellen Situation einen Störeffekt meldet, werden vom Hörsystem 2 im ersten Schritt S1 mehrere Merkmalswerte F der aktuellen Situation ermittelt und als ein Merkmalswertsatz G gespeichert werden. Die aktuelle Situation ist diejenige Situation, welche zu einem gegebenen Zeitpunkt vorliegt und ist durch Merkmalswerte F der Umgebung und/oder des Hörsystems 2 charakterisiert. Solche Merkmalswerte F sind beispielsweise Parameter oder Eigenschaften der Umgebung oder des Hörsystems 2.

Sobald das Hörsystem 2 eine Meldung M empfängt, werden mehrere Merkmalswerte F der aktuellen Situation gespeichert und bilden dabei einen Merkmalswertsatz G, von welchem aufgrund der Meldung M bekannt ist, dass für diesen Merkmalswertsatz G ein Störeffekt vorliegt. Die Merkmalswerte F beschreiben dabei die Situation in zeitlicher und räumlicher Nähe der Meldung M, d.h. die Merkmalswerte F kennzeichnen die Umgebung und/oder das Hörsystem 2 zum Zeitpunkt der Meldung M oder in einem Zeitfenster um den Zeitpunkt der Meldung M herum und in Hörweite des Nutzers oder innerhalb eines Raumes, in welchem sich der Nutzer aufhält.

Eine Identifikationseinheit 20 des Hörsystems 2 vergleicht nun mehrere gespeicherte Merkmalswertsätze G miteinander und ermittelt dabei in einem zweiten Schritt S2 des Verfahrens diejenigen Merkmalswerte F, welche in den mehreren Merkmalswertsätzen G übereinstimmen und welche dann als charakteristische Merkmalswerte C des Störeffekts angenommen werden, sodass die Identifikationseinheit 20 den Störeffekt anhand der charakteristischen Merkmalswerte C identifiziert. Dabei werden mehrere Meldungen M des Nutzers ausgewertet, sodass also aufgrund wiederkehrender Meldungen M ermitteln wird, welche Merkmalswerte F wiederkehrend vorliegen und damit charakteristisch sind für den Störeffekt, welcher auf diese Weise identifiziert wird. Im Rahmen des Verfahrens werden vom Hörsystem 2 demnach typischerweise mehrere Meldungen M entgegengenommen. Die beiden Schritte S1 und S2 werden dabei für jede Meldung M wiederholt. Dadurch, dass der Nutzer wiederkehrend den Störeffekt meldet, werden mit der Zeit immer genauer die charakteristischen Merkmalswerte C ermittelt, sodass eine Identifikation des Störeffekts anhand der charakteristischen Merkmalswerte C möglich ist und mit weiteren Meldungen M auch immer genauer wird, ohne dass der Nutzer den Störeffekt selbst in irgendeiner Weise charakterisieren muss.

Eine Ermittlung der charakteristischen Merkmalswerte C zwecks Identifikation des Störeffekts erfolgt durch die Identifikationseinheit 20 automatisch. Die Identifikationseinheit 20 bestimmt beispielsweise, mit welcher Wahrscheinlichkeit ein jeweiliger von mehreren vordefinierten, d.h. vorbekannten Störeffekten vorliegt, d.h. welcher Störeffekt einer jeweiligen Meldung M mit welcher Wahrscheinlichkeit zugrunde liegt. Die Wahrscheinlichkeiten zu einer einzelnen Meldung M bilden dann einen Wahrscheinlichkeitssatz. Ein jeweiliger Wahrscheinlichkeitssatz wird auch als Fehlerdefinition bezeichnet, da dieser angibt, welcher Störeffekt vermutlich vorliegt und diesen somit durch die einzelnen Wahrscheinlichkeiten definiert. Jede Meldung M erzeugt somit ein Datenpaar aus einem Merkmalswertsatz G und einem Wahrscheinlichkeitssatz. Diese Datenpaare werden vom Hörsystem 2 gesammelt und die Identifikationseinheit 20 ermittelt daraus ebenfalls im zweiten Schritt S2 den wahrscheinlichsten Störeffekt, sodass dieser identifiziert wird. Beispielsweise werden einfach bei jeder Meldung M die Wahrscheinlichkeiten zu jedem vorbekannten Störeffekt addiert und dann der Störeffekt als derjenige der vorbekannten Störeffekte identifiziert, welcher die höchste Wahrscheinlichkeit aufweist. In einer anderen geeigneten Ausgestaltung wird bei jeder Meldung einfach ein Zähler für denjenigen der vorbekannten Störeffekte erhöht, welcher die höchste Wahrscheinlichkeit aufweist und dann der Störeffekt als derjenige der vorbekannten Störeffekte identifiziert, welcher den höchsten Zähler aufweist.

Die Identifikationseinheit 20 ist ein Teil des Hörgeräts 2 oder ein Teil eines Zusatzgeräts 18 des Hörsystems 2 oder auf diese verteilt. Das Zusatzgerät 18 ist beispielsweise das in Fig. 1 gezeigte mobile Endgerät oder wie hier explizit gezeigt ein Server 22, welcher über ein Netzwerk zum Datenaustausch mit dem Hörgerät 4 und/oder einem mobilen Endgerät des Hörsystems 2, hier dem Zusatzgerät 18 verbunden ist.

Die Identifikationseinheit 20 ist eine Art intelligenter Klassifikator für Störeffekte. Der Identifikationseinheit 20 werden Merkmalswerte F als Eingangsparameter zugeführt und als Ausgangsparameter gibt die Identifikationseinheit 20 dann einen Störeffekt aus. Im gezeigten Ausführungsbeispiel ist die Identifikationseinheit 20 eine künstliche Intelligenz und weist hierbei beispielsweise ein neuronales Netz oder eine Clusteranalyseeinheit auf. Die Merkmalswerte F eines jeweiligen Merkmalswertsatzes G sind dann Eingangsparameter für die Identifikationseinheit 20 und der identifizierte Störeffekt ist ein Ausgangsparameter der Identifikationseinheit 20. Die hier gezeigte Identifikationseinheit 20 ist mit vorbekannten Zuordnungen von Störeffekten zu charakteristischen Merkmalswerten C vortrainiert. Dies erfolgt im Voraus mittels eines Vortrainings, welches nicht zwingend ein Teil des hier beschriebenen Verfahrens ist. Die Zuordnungen sind beispielsweise Trainingsdaten, welche im Voraus erzeugt wurden, um die Identifikationseinheit 20 zu trainieren.

Grundsätzlich ist es denkbar, dass die Identifikation des Störeffekts nicht oder nicht eindeutig möglich ist, z.B. nicht eindeutig ausfällt, sondern mehrere Störeffekte in Frage kommen. Vorliegend wird daher das Verfahren mehrmals durchlaufen, beispielsweise bis für einen von mehreren möglichen Störeffekten eine bestimmte Wahrscheinlichkeit erreicht ist. Vorliegend erfolgt eine Maßnahme gegen den Störeffekt im Schritt S3 erst dann, wenn eine bestimmte Mindestanzahl Amin an Meldungen M für diesen Störeffekt vorliegt. Zusätzlich wird vorliegend der Störeffekt lediglich solange identifiziert, bis eine bestimmte Maximalanzahl Amax an Meldungen M für diesen Störeffekt erreicht ist und dann jede weitere Meldung M ignoriert. Stattdessen wird der Nutzer darauf hingewiesen, zur Identifikation und/oder Behebung des Störeffekts einen Fachmann zu kontaktieren.

Optional wird zur Unterscheidung verschiedener Störeffekte ein jeweiliger Merkmalswertsatz G kategorisiert und hierbei einer Gruppe zugeordnet, sodass jedem Störeffekt eine Gruppe von Merkmalswertsätzen G zugeordnet ist. Beim Ermitteln übereinstimmender Merkmalswerte F werden dann lediglich die Merkmalswertsätze G einer einzelnen Gruppe miteinander verglichen. Das in Fig. 2 gezeigte Verfahren zeigt nur eine Gruppe und wird dann für mehrere Gruppen sozusagen mehrfach parallel nebeneinander für jeden von mehreren Störeffekten durchgeführt, sodass mehrere unterschiedliche Störeffekte identifiziert werden können. Es erfolgt eine Kategorisierung der Merkmalswertsätze G, mit dem Ziel einer Gruppierung der Merkmalswertsätze G in Gruppen, welche jeweils zumindest wahrscheinlich den gleichen Störeffekt kennzeichnen. Die Merkmalswertsätze G werden beispielsweise anhand deren Ähnlichkeit zueinander verschiedenen Gruppen zugeordnet, sodass ähnliche Merkmalswertsätze G zur gleichen Gruppe gehören, da diese wahrscheinlich den gleichen Störeffekt kennzeichnen, und unterschiedliche Merkmalswertsätze G zu unterschiedlichen Gruppen gehören, da diese wahrscheinlich unterschiedliche Störeffekte kennzeichnen.

Die Kategorisierung erfolgt automatisch durch das Hörsystem und/oder manuell durch den Nutzer. Beispielsweise wird ein jeweiliger Merkmalswertsatz G automatisch kategorisiert, indem dieser mit bereits gespeicherten Merkmalswertsätzen G verglichen wird und derjenigen Gruppe zugeordnet wird, welche den hierzu ähnlichsten Merkmalswertsatz G enthält. Eine manuelle Kategorisierung erfolgt beispielsweise, indem vom Nutzer zum Zeitpunkt der Meldung M oder später erfragt wird, ob der zugehörige Störeffekt bereits zuvor gemeldet worden ist, und indem weiter der jeweilige Merkmalswertsatz G derjenigen Gruppe mit dem hierzu ähnlichsten Merkmalswertsatz G zugeordnet wird, falls der zugehörige Störeffekt zuvor bereits gemeldet worden ist, und andernfalls einer neuen Gruppe.

Anhand der charakteristischen Merkmalswerte C wird vorliegend im Schritt S3 als Maßnahme in Reaktion auf den Störeffekt eine Einstellung für das Hörgerät 4 ermittelt, welche den zugehörigen Störeffekt reduziert, und welche dann vorliegend auch im Schritt S3 automatisch eingestellt wird oder dem Nutzer vorgeschlagen wird. Da der Störeffekt nun anhand der charakteristischen Merkmalswerte C identifiziert ist, wird beispielsweise in einer entsprechenden Datenbank 24 für diesen Störeffekt eine Einstellung nachgeschlagen oder anhand einer Rechenvorschrift errechnet.

Die Merkmalswertsätze G werden vorliegend in einer zentralen Datenbank 26 gesammelt, zur zentralisierten Auswertung und jeweiligen Zuordnung zu einem Störeffekt. Dabei werden vorliegend die Merkmalswertsätze G von mehreren Hörsystem 2 in der Datenbank 26 gesammelt und dadurch zusammengeführt, zur gemeinsamen Auswertung. Die Einstellungen werden dann von der Datenbank 26 an ein jeweiliges Hörsystem 2 übermittelt oder von diesem abgefragt, um bei Identifikation eines bestimmten Störeffekts entsprechend zu reagieren.

### Bezugszeichenliste

- 2: Hörsystem
- 4: Hörgerät
- 6: Mikrofon
- 8: Signalverarbeitung
- 10: Steuereinheit
- 12: Hörer
- 14: Einzelgerät
- 16: Eingabeelement
- 18: Zusatzgerät
- 20: Identifikationseinheit
- 22: Server
- 24: Datenbank
- 26: zentrale Datenbank
- Amax: Maximalanzahl
- Amin: Mindestanzahl
- C: charakteristischer Merkmalswert
- F: Merkmalswert
- G: Merkmalswertsatz
- M: Meldung
- S1: erster Schritt
- S2: zweiter Schritt
- S3: dritter Schritt

## Patentansprüche

1. Verfahren zur Identifikation eines Störeffekts,
- wobei ein Hörsystem (2) ein Hörgerät (4) aufweist, welches von einem Nutzer getragen wird, zur Schallausgabe an den Nutzer,
- wobei das Hörsystem (2) ausgebildet ist, von dem Nutzer wiederkehrend eine Meldung (M) derart zu empfangen, dass bei der Schallausgabe der Störeffekt vorliegt,
- wobei, falls der Nutzer in einer aktuellen Situation den Störeffekt meldet, Werte mehrerer bestimmter Merkmale der aktuellen Situation als Merkmalswerte (F) ermittelt und als ein Merkmalswertsatz (G) gespeichert werden,
- wobei vom Hörsystem (2) mehrere Meldungen (M) vom Nutzer entgegengenommen werden, sodass mehrere gespeicherte Merkmalswertsätze (G) erzeugt werden,
**dadurch gekennzeichnet,**
- **dass** eine Identifikationseinheit (20) die mehreren gespeicherten Merkmalswertsätze (G) miteinander vergleicht und dabei diejenigen Merkmalswerte (F) ermittelt, welche in den mehreren Merkmalswertsätzen (G) übereinstimmen und welche dann als charakteristische Merkmalswerte (C) des Störeffekts angenommen werden, sodass die Identifikationseinheit (20) den Störeffekt anhand der charakteristischen Merkmalswerte (C) identifiziert.

2. Verfahren nach Anspruch 1,
wobei die Identifikationseinheit (20) mit vorbekannten Zuordnungen von Störeffekten zu charakteristischen Merkmalswerten (C) vortrainiert ist.

3. Verfahren nach einem der Ansprüche 1 oder 2,
wobei die Identifikationseinheit (20) mit Trainingsdaten vortrainiert ist, welche reale Trainingsdaten und künstliche Trainingsdaten enthalten,
wobei die realen Trainingsdaten vorbekannte Zuordnungen von vorbekannten Merkmalswerten (F) zu Störeffekten sind,
wobei die künstlichen Trainingsdaten ausgehend von den realen Trainingsdaten dadurch erzeugt sind, dass aus den vorbekannten Merkmalswerten (F) zu einem jeweiligen Störeffekt durch Abwandlung innerhalb eines Toleranzbereichs, neue Merkmalswerte (F) erzeugt sind, welche dem gleichen Störeffekt zugeordnet sind.

4. Verfahren nach einem der Ansprüche 1 bis 3,
wobei eine Maßnahme gegen den Störeffekt erst dann erfolgt, wenn eine bestimmte Mindestanzahl (Amin) an Meldungen (M) für diesen Störeffekt vorliegt.

5. Verfahren nach einem der Ansprüche 1 bis 4,
wobei der Störeffekt lediglich solange identifiziert wird, bis eine bestimmte Maximalanzahl (Amax) an Meldungen (M) für diesen Störeffekt erreicht ist.

6. Verfahren nach einem der Ansprüche 1 bis 5,
wobei zur Unterscheidung verschiedener Störeffekte ein jeweiliger Merkmalswertsatz (G) kategorisiert wird und hierbei einer Gruppe zugeordnet wird, sodass jedem Störeffekt eine Gruppe von Merkmalswertsätzen (G) zugeordnet ist,
wobei beim Ermitteln übereinstimmender Merkmalswerte (F) lediglich die Merkmalswertsätze (G) einer einzelnen Gruppe miteinander verglichen werden.

7. Verfahren nach Anspruch 6,
wobei ein jeweiliger Merkmalswertsatz (G) automatisch kategorisiert wird, indem dieser mit bereits gespeicherten Merkmalswertsätzen (G) verglichen wird und derjenigen Gruppe zugeordnet wird, welche den hierzu ähnlichsten Merkmalswertsatz (G) enthält.

8. Verfahren nach Anspruch 5 oder 7,
wobei ein jeweiliger Merkmalswertsatz (G) kategorisiert wird, indem vom Nutzer erfragt wird, ob der zugehörige Störeffekt bereits zuvor gemeldet worden ist, und indem weiter der jeweilige Merkmalswertsatz (G) derjenigen Gruppe mit dem hierzu ähnlichsten Merkmalswertsatz (G) zugeordnet wird, falls der zugehörige Störeffekt zuvor bereits gemeldet worden ist, und andernfalls einer neuen Gruppe.

9. Verfahren nach einem der Ansprüche 1 bis 8,
wobei anhand der charakteristischen Merkmalswerte (C) eine Einstellung für das Hörgerät (4) ermittelt wird, welche den Störeffekt reduziert, und welche dann automatisch eingestellt wird oder dem Nutzer vorgeschlagen wird.

10. Verfahren nach einem der Ansprüche 1 bis 9,
wobei die Merkmalswertsätze (G) in einer zentralen Datenbank (26) gesammelt werden, zur zentralisierten Auswertung und jeweiligen Zuordnung zu einem Störeffekt.

11. Verfahren nach einem der Ansprüche 1 bis 10,
wobei zumindest eines der Merkmalswerte (F) ein Betriebsparameter des Hörgeräts (4) in der aktuellen Situation ist.

12. Verfahren nach einem der Ansprüche 1 bis 11,
wobei zumindest eines der Merkmalswerte (F) ein Umgebungsparameter ist, welcher mit einem Sensor (6) des Hörsystems (2) in der aktuellen Situation gemessen wird.

13. Hörsystem (2), welches ausgebildet zur Durchführung eines Verfahrens gemäß einem der Ansprüche 1 bis 12.

14. Computerprogrammprodukt, welches ein ausführbares Programm enthält, welches bei oder nach einer Installation auf einem Hörsystem das Verfahren nach einem der Ansprüche 1 bis 12 automatisch ausführt.

## Claims

1. Method for identifying a disturbing effect,
- wherein a hearing system (2) has a hearing device (4) that is worn by a user for sound output to the user,
- wherein the hearing system (2) is designed to receive recurrently a report (M) from the user to the effect that a disturbing effect is present in the sound output,
- wherein, if the user reports a disturbing effect in a prevailing situation, a plurality of features (F) of the prevailing situation are determined and saved as a feature set (G),
- wherein an identification unit (20) compares a plurality of saved feature sets (G) with each other, determining in the process those features (F) that match in the plurality of feature sets (G) and that are then assumed to be characteristic features (C) of the disturbing effect, so that the identification unit (20) identifies the disturbing effect on the basis of the characteristic features (C).

2. Method according to Claim 1,
wherein the identification unit (20) is pre-trained using pre-known assignments of disturbing effects to characteristic features (C).

3. The method according to either Claim 1 or Claim 2, wherein the identification unit (20) is pre-trained using training data that contains real training data and artificial training data, wherein the real training data is pre-known assignments of pre-known features (F) to disturbing effects,
wherein the artificial training data is generated on the basis of the real training data by modifying the pre-known features (F) for a particular disturbing effect within a tolerance range to generate new features (F), which are assigned to the same disturbing effect.

4. Method according to any one of Claims 1 to 3, wherein a measure to counter the disturbing effect is taken only once a certain minimum number (Amin) of reports (M) for this disturbing effect are present.

5. Method according to any one of Claims 1 to 4, wherein the disturbing effect is identified only until a certain maximum number (Amax) of reports (M) for this disturbing effect is reached.

6. Method according to any one of Claims 1 to 5, wherein, for the purpose of distinguishing between different disturbing effects, a particular feature set (G) is categorized and assigned to a group, with the result that each disturbing effect is assigned a group of feature sets (G), wherein in the determining of matching features (F), just the feature sets (G) of a single group are compared with one another.

7. Method according to Claim 6,
wherein a particular feature set (G) is categorized automatically by comparing it with already stored feature sets (G), and assigning it to the group that contains the feature set (G) to which it is most similar.

8. Method according to Claim 5 or Claim 7,
wherein a particular feature set (G) is categorised by asking the user whether the associated disturbing effect has already been reported before, and in addition by assigning the particular feature set (G) to that group containing the feature set (G) that is most similar to it, if the associated disturbing effect has already been reported before, and otherwise to a new group.

9. Method according to any one of Claims 1 to 8, wherein a setting for the hearing device (4), which setting reduces the disturbing effect, is determined on the basis of the characteristic features (C) and is then set automatically or suggested to the user.

10. Method according to any one of Claims 1 to 9, wherein the feature sets (G) are collected in a central database (26) for centralized analysis and assignment to a particular disturbing effect.

11. Method according to any one of Claims 1 to 10, wherein at least one of the features (F) is an operating parameter of the hearing device (4) in the prevailing situation.

12. Method according to any one of Claims 1 to 11, wherein at least one of the features (F) is a surroundings parameter, which is measured by a sensor (6) of the hearing system (2) in the prevailing situation.

13. Hearing system (2), which is designed to perform a method according to any one of Claims 1 to 12.

14. Computer program product, which contains an executable program which, during or after installation on a hearing system, automatically executes the method as claimed in one of Claims 1 to 12.

## Revendications

1. Procédé d'identification d'un effet perturbateur,
- dans lequel un système auditif (2) comprend un appareil auditif (4) porté par un utilisateur pour émettre des sons à l'intention de l'utilisateur,
- le système auditif (2) étant conçu pour recevoir de manière récurrente de l'utilisateur un message (M) indiquant que l'effet perturbateur est présent lors de l'émission des sons,
- les valeurs de plusieurs caractéristiques déterminées de la situation actuelle étant, si l'utilisateur signale l'effet perturbateur dans une situation actuelle, déterminées en tant que valeurs caractéristiques (F)
et sont enregistrées en tant qu'ensemble de valeurs caractéristiques (G),
- le système auditif (2) recevant plusieurs messages (M) de l'utilisateur, de sorte que plusieurs ensembles de valeurs caractéristiques enregistrés (G) sont générés, **caractérisé**
- **en ce qu'**une unité d'identification (20) compare entre eux les ensembles de valeurs caractéristiques de la pluralité d'ensembles de valeurs caractéristiques (G) enregistrés et détermine les valeurs caractéristiques (F) qui correspondent dans les ensembles de valeurs caractéristiques (G) et qui sont alors considérées comme des valeurs caractéristiques (C) de l'effet perturbateur, de sorte que l'unité d'identification (20) identifie l'effet perturbateur sur la base des valeurs caractéristiques (C).

2. Procédé selon la revendication 1,
dans lequel l'unité d'identification (20) est préentraînée à des valeurs caractéristiques (C), au moyen d'attributions d'effets perturbateurs connues au préalable.

3. Procédé selon l'une des revendications 1 à 2,
dans lequel l'unité d'identification (20) est préentraînée avec des données d'entraînement qui contiennent des données d'entraînement réelles et des données d'entraînement artificielles,
les données d'entraînement réelles étant des affectations connues au préalable de valeurs caractéristiques (F) connues au préalable, à des effets perturbateurs,
les données d'entraînement artificielles étant générées à partir des données d'entraînement réelles en générant, à partir des valeurs caractéristiques (F) préalablement connues pour un effet perturbateur respectif, de nouvelles valeurs caractéristiques (F) qui sont attribuées au même effet perturbateur, par modification dans une gamme de tolérance.

4. Procédé selon l'une des revendications 1 à 3,
dans lequel une mesure contre l'effet perturbateur n'est prise que lorsqu'un nombre minimum déterminé (Amin) de messages (M) pour cet effet perturbateur est atteint.

5. Procédé selon l'une des revendications 1 à 4,
dans lequel l'effet perturbateur n'est identifié que jusqu'à ce qu'un nombre maximal déterminé (Amax) de messages (M) pour cet effet perturbateur soit atteint.

6. Procédé selon l'une des revendications 1 à 5,
dans lequel, pour distinguer différents effets perturbateurs, un ensemble de valeurs caractéristiques (G) est classé et attribué à un groupe, de sorte qu'à chaque effet perturbateur est attribué un groupe d'ensembles de valeurs caractéristiques (G),
les ensembles de valeurs caractéristiques (G) d'un seul groupe étant, lors de la détermination des valeurs caractéristiques correspondantes (F), comparés entre eux.

7. Procédé selon la revendication 6,
dans lequel un ensemble de valeurs caractéristiques (G) est automatiquement classé en le comparant à des ensembles de valeurs caractéristiques (G) déjà enregistrés et en l'affectant au groupe qui contient l'ensemble de valeurs caractéristiques (G) le plus similaire.

8. Procédé selon la revendication 5 ou la revendication 7,
dans lequel un ensemble de valeurs caractéristiques (G) est classé en demandant à l'utilisateur si l'effet perturbateur correspondant a déjà été signalé auparavant et en affectant ensuite l'ensemble de valeurs caractéristiques (G) au groupe contenant l'ensemble de valeurs caractéristiques (G) le plus similaire, si l'effet perturbateur correspondant a déjà été signalé auparavant, et, sinon, à un nouveau groupe.

9. Procédé selon l'une des revendications 1 à 8,
dans lequel, au moyen des valeurs caractéristiques (C), un réglage pour l'appareil auditif (4) est déterminé, lequel réduit l'effet perturbateur et lequel est ensuite réglé automatiquement ou proposé à l'utilisateur.

10. Procédé selon l'une des revendications 1 à 9,
dans lequel les ensembles de valeurs caractéristiques (G) sont collectés dans une base de données centrale (26) pour une évaluation centralisée et une attribution respective à un effet perturbateur.

11. Procédé selon l'une des revendications 1 à 10,
dans lequel au moins l'une des valeurs caractéristiques (F) est un paramètre de fonctionnement de l'appareil auditif (4) dans la situation actuelle.

12. Procédé selon l'une des revendications 1 à 11,
dans lequel au moins l'une des valeurs caractéristiques (F) est un paramètre environnemental qui est mesuré dans la situation actuelle au moyen d'un capteur (6) du système auditif (2).

13. Système auditif (2) conçu pour mettre en œuvre un procédé selon l'une des revendications 1 à 12.

14. Produit de programme d'ordinateur contenant un programme exécutable qui, lors de son installation sur un système auditif, ou après cette installation, met en œuvre automatiquement le procédé selon l'une des revendications 1 à 12.
